# EUROPÄISCHE PATENTSCHRIFT

(11) **EP 4 069 965 B1**
(45) Veröffentlichungstag und Bekanntmachung des Hinweises auf die Patenterteilung: **22.03.2023**
(21) Anmeldenummer: 20808339.4
(22) Anmeldetag: 17.11.2020
(51) Int. Cl.: F03B 3/18

(54) **WASSERKRAFTANLAGE**
HYDROELECTRIC POWER PLANT
CENTRALE HYDROÉLECTRIQUE

(30) Priorität: 04.12.2019 DE 102019132930
(43) Veröffentlichungstag der Anmeldung: 12.10.2022
(73) Patentinhaber: Voith Patent GmbH, 89522 Heidenheim (DE)
(72) Erfinder: SCHABASSER, Martin, 3123 Pfaffing (AT); SALLFERT, Martin, 3441 Baumgarten (AT)
(86) Internationale Anmeldenummer: PCT/EP2020/082328
(87) Internationale Veröffentlichungsnummer: WO 2021/110402

(56) Entgegenhaltungen:
- EP-A1- 2 667 020
- EP-A2- 1 916 417
- WO-A1-2017/001695
- DE-B3-102017 116 968

## Beschreibung

Die Erfindung betrifft eine Wasserkraftanlage mit wenigstens einem elektrischen Antriebssystem, wobei die Wasserkraftanlage ein Schließorgan umfasst, und das elektrische Antriebssystem zur Betätigung des Schließorgans verwendet wird. Bei dem Schließorgan kann es sich beispielsweise um einen Leitapparat oder um ein Ventil zum Unterbrechen des Wasserflusses durch die Wasserkraftanlage handeln (Einlaufventil).

In der Regel werden zur Betätigung des Schließorgans von Wasserkraftanlagen Antriebssysteme mit ölhydraulischen Servomotoren in Form von Hydraulikzylindern verwendet. Im Schadensfall ergibt sich dadurch das Risiko der Verschmutzung des Gewässers durch das Hydrauliköl. Zur Lösung dieses Problems wurden im Stand der Technik elektrisch betriebene Servomotoren vorgeschlagen.

Die WO 2016/145541 A1 offenbart beispielsweise eine Wasserkraftanlage mit elektrischen Servomotoren zum Bewegen der Leitschaufeln eines Leitapparats. Die DE 10 2017 116 968 B3 offenbart eine Wasserkraftanlage mit einem elektrischen Antrieb zur Betätigung des Einlaufventils. Die EP 1 916 417 A2 betrifft eine Ansteuerschaltung zum Betrieb eines Gleichstrommotors.

Wasserkraftanlagen müssen hohe Sicherheitsstandards erfüllen, da bei einem technischen Versagen hohe Sachschäden entstehen und Menschen gefährdet werden können. So kann beispielsweise bei einem zu raschen Schließen der Schließorgane die Druckrohrleitung des Wasserkraftwerks bersten und so ganze Landstriche unter Wasser setzen. Zur Vermeidung solcher Schäden müssen insbesondere die jeweils vorgesehenen Schließzeiten bzw. die maximal zulässigen Schließgeschwindigkeiten eingehalten werden. Außerdem muss das Sicherheitssystem der Wasserkraftanlage sicherstellen können, dass die Schließgesetze auch beim Ausfall von einzelnen Komponenten noch eingehalten werden können (Fehlertoleranz).

Der Erfinder hat sich die Aufgabe gestellt, eine Wasserkraftanlage mit einem besonders fehlertoleranten elektrischen Antriebssystem zur Betätigung eines Schließorgans anzugeben.

Die gestellte Aufgabe wird durch eine Wasserkraftanlage mit den Merkmalen des unabhängigen Anspruchs gelöst. Vorteilhafte Ausführungsformen ergeben sich aus den davon abhängigen Unteransprüchen.

Die erfindungsgemäße Lösung wird nachfolgend anhand von Figuren erläutert. Darin ist im Einzelnen folgendes dargestellt:
- Figur 1: Gattungsgemäße Wasserkraftanlage;
- Figur 2: Elektrisches Antriebssystem zum Betätigen des Schließorgans einer erfindungsgemäßen Wasserkraftanlage.

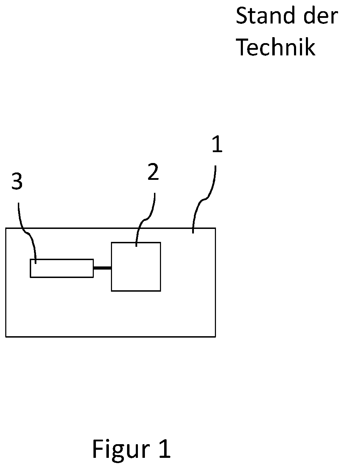

Figur 1 zeigt in sehr schematischer Darstellung eine gattungsgemäße Wasserkraftanlage gemäß dem Stand der Technik. Dabei ist die Wasserkraftanlage mit 1 bezeichnet. Die Wasserkraftanlage 1 umfasst ein Schließorgan, welches mit 2 bezeichnet ist, und einen elektrischen Antrieb bzw. ein elektrisches Antriebssystem, welches mit 3 bezeichnet ist. Der elektrische Antrieb ist so mit dem Schließorgan 2 verbunden, dass er dasselbe betätigen kann. Das Schließorgan 2 kann z.B. ein Einlaufventil sein, welches durch den elektrischen Antrieb geöffnet und geschlossen wird. Oder das Schließorgan 2 ist ein Leitapparat, wobei der elektrische Antrieb 3 den Leitapparat betätigt. In diesem Fall muss der elektrische Antrieb 3 den Leitappart definiert in vorgegebene Positionen bringen. Sicherheitsrelevant ist in allen Fällen das Anfahren der Geschlossen-Stellung des Schließorgans 2, damit das Wasserkraftwerk zuverlässig stillgesetzt werden kann.

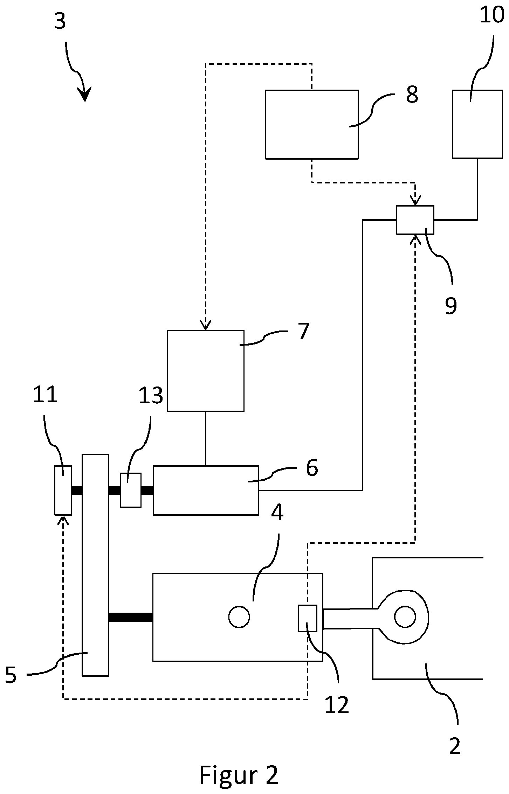

Figur 2 zeigt ein elektrisches Antriebssystem zum Betätigen eines Schließorgans einer erfindungsgemäßen Wasserkraftanlage, wobei das Schließorgan mit 2 und das elektrische Antriebssystem mit 3 bezeichnet sind. Das elektrische Antriebssystem 3 umfasst eine Gewindespindel, welche mit 4 bezeichnet ist. Zum Betätigen des Schließorgans 2 ist die Gewindespindel 4 mit dem Schließorgan 2 verbunden. In Figur 2 sind durch die beiden kleinen Kreise die Angriffspunkte der Gewindespindel 4 angedeutet. Mit einem der Angriffspunkte wird die Gewindespindel 4 abgestützt, z.B. am einem Gehäuse oder Fundament, und mit dem anderen Angriffspunkt greift die Gewindespindel 4 am Schließorgan 2 an. Das elektrische Antriebssystem 3 umfasst ferner ein Getriebe, welches mit der Gewindespindel 4 verbunden und mit 5 bezeichnet ist. Das elektrische Antriebssystem 3 umfasst ferner einen elektrischen Motor, welcher mit 6 bezeichnet ist. Dabei ist die Antriebswelle des Motors 6 so mit dem Getriebe 5 verbunden, dass der Motor 6 die Gewindespindel 4 über das Getriebe 5 antreiben kann. Dabei definieren Gewindespindel 4, Getriebe 5 und Motor 6 einen Antriebsstrang. Der Motor 6 ist mit einem Umrichter verbunden, welcher den Motor 6 speist und mit 7 bezeichnet ist. Der Umrichter 7 ermöglicht einen Betrieb des Motors 6 mit variabler Drehzahl. Das Antriebssystem 3 umfasst ferner eine Steuereinheit zum Steuern des Antriebssystems 3, welche mit 8 bezeichnet ist. Dabei steuert die Steuereinheit 8 primär den Umrichter 7, wobei die Drehgeschwindigkeit des Motors 6 durch die Frequenz des Umrichters 7 bestimmt wird. Diese Regelbeziehung ist durch den gestrichelten Pfeil zwischen Steuereinheit 8 und Umrichter 7 angedeutet. Im Normalbetrieb legt die Steuereinheit 8 auf diese Weise die Stellgeschwindigkeit des Antriebssystems 3 fest. Das betrifft insbesondere auch die Schließgeschwindigkeit des Schließorgans, welche in der Regel einen bestimmten vordefinierten Wert auf keinen Fall überschreiten darf. Dieser Wert wird als die maximal zulässige Schließgeschwindigkeit bezeichnet. Der maximal zulässigen Schließgeschwindigkeit entspricht daher eine maximal zulässige Frequenz des Umrichters 7. Der Wert dieser Frequenz hängt von der Auslegung des Motors 6, des Getriebes 5 und der Gewindespindel 4 ab.

Bei einem Ausfall oder bei einer Fehlfunktion des Umrichters 7 kann ein herkömmliches Antriebssystem mit den oben beschriebenen Komponenten das Schließorgan 2 nicht mehr ohne weiteres betätigen. Der Erfinder hat sich die Aufgabe gestellt, das Antriebssystem so zu verbessern, dass in diesem Fehlerfall wenigstens ein sicheres Schließen des Schließorgans 2 gewährleistet werden kann, wobei die maximale Schließgeschwindigkeit nicht überschritten wird.

Dies wird dadurch erreicht, dass in diesem Fall der Motor 6 direkt mit einem Wechselstrom-Netzanschluss verbunden wird. In Figur 2 ist der Wechselstrom-Netzanschluss mit 10 bezeichnet. In einer Verbindungsleitung zwischen Motor 6 und Netzanschluss 10 ist ein Schalter angeordnet, welcher mit 9 bezeichnet ist. Der Schalter 9 befindet sich im Normalbetrieb im geöffneten Zustand, sodass der Motor 6 nicht mit dem Netzanschluss 10 elektrisch verbunden ist. Wird eine Fehlfunktion des Umrichters 7 detektiert, so wird der Schalter 9 geschossen und der Motor 6 mit der Frequenz des Netzanschlusses 10 betrieben (Netzfrequenz), und dadurch das Schließorgan 2 geschlossen. Damit es dabei nicht zu einer Überschreitung der maximalen Schließgeschwindigkeit kommt, müssen der Motor 6, das Getriebe 5 und die Gewindespindel 4 so ausgelegt sein, dass die Stellgeschwindigkeit des Antriebs 3 bei einem Betrieb des Motors 6 mit der Netzfrequenz unterhalb der maximalen Schließgeschwindigkeit liegt. Da die Netzfrequenz normalerweise nur äußerst geringen Schwankungen unterliegt, kann so ein sicheres Schließen des Schließorgans 2 gewährleistet werden, auch wenn es zu einem Ausfall des Umrichters 7 kommt.

Zur Bereitstellung der im vorstehenden Abschnitt beschriebenen Funktionalität muss der Funktionszustand des Umrichters 7 überwacht werden. Dazu umfasst der erfindungsgemäße Antrieb 3 eine Überwachungseinheit. In Figur 2 übernimmt die Steuereinheit 8 diese Aufgabe. Es kann dafür jedoch auch eine separate Einheit vorgesehen sein. Detektiert die Überwachungseinheit eine Fehlfunktion des Umrichters 7, so veranlasst dieselbe ein Schließen des Schalters 9 um eine direkte elektrische Verbindung zwischen dem Motor 6 und dem Wechselstrom-Netzanschluss herzustellen. Diese Regelbeziehung ist in Figur 2 durch den gestrichelten Pfeil zwischen der Steuereinheit bzw. Überwachungseinheit 8 und dem Schalter 9 angedeutet.

Nachdem der Schließvorgang abgeschlossen ist, welcher durch den Betrieb des Motors 6 mittels der direkten Verbindung mit dem Wechselstrom-Netzanschluss 10 zustande gekommen ist, muss der Motor 6 abgeschaltet werden. Dazu ist ein Endschalter vorgesehen, welcher mit 12 bezeichnet ist und welcher betätigt wird, wenn sich das Schließorgan 2 in der Geschlossen-Position befindet. Der Endschalter 12 ist dabei so ausgebildet, dass er den Schalter 9 öffnen und somit den Motor 6 vom Wechselstrom-Netzanschluss 10 trennen kann, wenn sich das Schließorgan 2 in der Geschlossen-Position befindet. Diese Regelbeziehung ist in Figur 2 durch den gestrichelten Pfeil zwischen dem Endschalter 12 und dem Schalter 9 angedeutet. Die genannte Funktionalität kann dabei über eine direkte Verbindung zwischen diesen Elementen oder indirekt z.B. über die Steuer- bzw. Überwachungseinheit 8 erfolgen. Der Endschalter 12 kann dabei natürlich auch elektrisch in der Leitung zwischen dem Motor 6 und dem Wechselstrom-Netzanschluss 10 angeordnet sein. Der Endschalter 12 kann lokal wie in Figur 2 dargestellt an der Gewindespindel 4 angeordnet sein. Er kann jedoch genauso gut lokal am Schließorgan 2 oder an einem anderen geeigneten Ort angeordnet sein. Entscheidend ist dabei lediglich, dass der Endschalter 12 betätigt werden kann, wenn sich das Schließorgan 2 in der Geschlossen-Position befindet.

Nach dem Abschalten des Motors 6 muss dafür gesorgt sein, dass sich das Schließorgan 2 nicht wieder selbständig öffnen kann, da der Motor 6 nach dem Abschalten momentlos ist. Je nach Auslegung des Schließorgans 2 kann das beispielsweise dadurch gewährleistet sein, dass das Schließorgan 2 eine Schließtendenz aufweist, so dass ein selbstständiges Öffnen desselben ausgeschlossen ist. Wenn das nicht der Fall ist kann eine Halte-Bremse vorgesehen sein, welche den Antriebstrang blockiert kann, wenn sich das Schließorgan 2 in der Geschlossen-Position befindet. In Figur 2 ist die Halte-Bremse mit 11 bezeichnet. Die Geschlossen-Position wird zweckmäßigerweise mittels des Endschalters 12 detektiert. Die entsprechende Regelbeziehung ist in Figur 2 durch den gestrichelten Pfeil zwischen dem Endschalter 12 und der Halte-Bremse 11 angedeutet. Die genannte Funktionalität kann dabei über eine direkte Verbindung zwischen diesen Elementen oder indirekt z.B. über die Steuer- bzw. Überwachungseinheit 8 erfolgen. Die Halte-Bremse ist dabei vorzugsweise so angeordnet, dass sie motorseitig in den Antriebsstrang eingreifen kann. Die Halte-Bremse 11 kann dabei den Antriebsstrang über Reibungskräfte festhalten oder auch mittels eines Riegels in denselben arretierend eingreifen. Eine Halte-Bremse 11 kann natürlich auch dann zur weiteren Absicherung vorgesehen sein, wenn das Schließorgan 2 eine Schließtendenz aufweist. Zum Öffnen nach einem solchen Schließvorgang muss die Halte-Bremse natürlich zunächst gelöst werden.

Es ist denkbar, dass der oben beschriebene Abschaltvorgang ausfallen kann. Daher ist es zur Absicherung dieses Fehlerfalles von Vorteil, wenn im Antriebsstrang eine Überlastsicherung angeordnet ist, um die mechanischen Teile des Antriebssystems 3 vor Zerstörung zu schützen, wenn sich das Schließorgan 2 in der Geschlossen-Position befindet und daher eine weitere Bewegung in Richtung Schließen nicht mehr möglich ist. Die Überlastsicherung verhindert, dass bei einer Blockade des Antriebsstrangs das vom Motor aufgebrachte und auf den Antriebsstrang übertragene Moment unbegrenzt ansteigen kann. Eine solche optionale Überlastsicherung ist in Figur 2 auf der Antriebswelle des Motors 6 angeordnet und mit 13 bezeichnet, d.h. die Überlastsicherung 13 ist zwischen Motor 6 und Getriebe 5 angeordnet. Die Überlastsicherung 13 ist vorzugsweise als Reibelement ausgeführt, sodass im angesprochenen Zustand weiterhin ein Moment übertragen wird, und sich die Getriebespindel nicht frei bewegen kann und daher das Schließorgan in der Geschlossen-Position gehalten wird. Es ist dabei klar, dass die Überlastsicherung 13 die Endabschaltung 12 und auch die Halte-Bremse 11 ersetzen kann, so dass die genannten Elemente als optional zu betrachten sind.

### Bezugszeichenliste

- 1: Wasserkraftanlage
- 2: Schließorgan
- 3: Elektrischer Antrieb bzw. Antriebssystem
- 4: Gewindespindel
- 5: Getriebe
- 6: Elektromotor
- 7: Umrichter
- 8: Steuereinheit / Überwachungseinheit
- 9: Schalter
- 10: Wechselstrom-Netzanschluss
- 11: Halte-Bremse
- 12: Endschalter
- 13: Überlastsicherung

## Patentansprüche

1. Wasserkraftanlage (1) mit einem Schließorgan (2) und einem elektrischen Antriebssystem (3), welches mit dem Schließorgan (2) verbunden ist, wobei das Antriebssystem (3) eine Gewindespindel (4), ein Getriebe (5) und einen Elektromotor (6) umfasst, welche einen Antriebsstrang definieren, und wobei das Antriebssystem (3) ferner einen Umrichter (7) zur Speisung des Elektromotors (6), eine Steuereinheit (8) zum Steuern des Umrichters (7) und einen Wechselstrom-Netzanschluss (10) mit einer Netzfrequenz umfasst, wobei das Antriebssystem (3) eine Überwachungseinheit (8) zum Überwachen des Funktionszustands des Umrichters (7) und einen Schalter (9) umfasst, wobei die Überwachungseinheit (8) und der Schalter (9) so ausgebildet sind, dass der Elektromotor (6) mittels einer direkten elektrischen Verbindung zwischen dem Elektromotor (6) und dem Wechselstrom-Netzanschluss (10) betrieben werden kann, wenn die Überwachungseinheit (8) eine Fehlfunktion des Umrichters (7) detektiert, und wobei der Elektromotor (6), das Getriebe (5) und die Gewindespindel (4) so ausgelegt sind, dass eine Stellgeschwindigkeit des Antriebssystems (3), welche sich bei einem Betrieb des Elektromotors (6) mit der Netzfrequenz ergibt, unterhalb einer maximal zulässigen Schließgeschwindigkeit des Schließorgans (2) liegt.

2. Wasserkraftanlage (1) nach Anspruch 1, wobei das Antriebssystem (3) einen Endschalter (12) umfasst, welcher so ausgebildet und angeordnet ist, dass er den Elektromotor (6) vom Wechselstrom-Netzanschluss (10) trennen kann, wenn sich das Schließorgan in der Geschlossen-Position befindet.

3. Wasserkraftanlage (1) nach einem der Ansprüche 1 oder 2, wobei das Antriebssystem (3) eine Überlastsicherung (13) umfasst, welche so ausgebildet und angeordnet ist, dass sie bei einer Blockade des Antriebsstrangs das vom Elektromotor (6) aufgebrachte und auf den Antriebsstrang übertragene Moment begrenzen kann.

4. Wasserkraftanlage (1) nach Anspruch 3, wobei die Überlastsicherung (13) zwischen Elektomotor (6) und Getriebe (5) angeordnet ist.

5. Wasserkraftanlage (1) nach Anspruch 3, wobei die Überlastsicherung (13) als Reibelement ausgeführt ist.

6. Wasserkraftanlage (1) nach einem der vorangehenden Ansprüche, wobei das Antriebssystem (3) eine Halte-Bremse (11) umfasst, welche so ausgebildet und angeordnet ist, dass sie den Antriebstrang blockiert kann, wenn sich das Schließorgan (2) in der Geschlossen-Position befindet.

7. Wasserkraftanlage (1) nach Anspruch 6, wobei die Halte-Bremse (11) so angeordnet ist, dass sie motorseitig des Getriebes (5) in den Antriebsstrang eingreifen kann.

8. Verfahren zum Betrieb einer Wasserkraftanlage (1) gemäß einem der vorangehenden Ansprüche, wobei die Überwachungseinheit (8) die Funktionalität des Umrichters (7) überwacht, und bei einer Fehlfunktion des Umrichters (7) den Schalter (9) schließt und dadurch eine direkte elektrische Verbindung zwischen dem Elektromotor (6) und dem Wechselstrom-Netzanschluss (10) herstellt, so dass der Elektromotor (6) mit der Netzfrequenz betrieben wird und dabei das Schließorgan (2) schließt.

## Claims

1. A hydroelectric power plant (1) comprising a closing member (2) and an electric drive system (3) connected to the closing member (2), wherein the drive system (3) comprises a threaded spindle (4), a gearbox (5) and an electric motor (6) defining a drive train, and wherein the drive system (3) further comprises an inverter (7) for feeding the electric motor (6), a control unit (8) for controlling the inverter (7), and an AC power supply (10) having a power frequency, wherein the drive system (3) comprises a monitoring unit (8) for monitoring the functional state of the inverter (7) and a switch (9), wherein the monitoring unit (8) and the switch (9) are designed such that the electric motor (6) can be operated by means of a direct electrical connection between the electric motor (6) and the AC mains connection (10) when the monitoring unit (8) detects a malfunction of the inverter (7), and wherein the electric motor (6), the gear (5) and the threaded spindle (4) are designed in such a way that a positioning speed of the drive system (3), which results when the electric motor (6) is operated at the mains frequency, is below a maximum permissible closing speed of the closing member (2).

2. A hydroelectric power plant (1) according to claim 1, wherein the drive system (3) comprises a limit switch (12) configured and arranged to disconnect the electric motor (6) from the AC power supply (10) when the closing member is in the closed position.

3. A hydroelectric power plant (1) according to any one of claims 1 or 2, wherein the drive system (3) comprises an overload protection device (13) which is designed and arranged to limit the torque applied by the electric motor (6) and transmitted to the drive train in the event of a blockage of the drive train.

4. Hydroelectric power plant (1) according to claim 3, wherein the overload protection (13) is arranged between the electric motor (6) and the gearbox (5).

5. Hydroelectric power plant (1) according to claim 3, wherein the overload protection (13) is designed as a friction element.

6. A hydroelectric power plant (1) according to any one of the preceding claims, wherein the drive system (3) comprises a holding brake (11) constructed and arranged to be able to block the drive train when the closing member (2) is in the closed position.

7. Hydroelectric power plant (1) according to claim 6, wherein the holding brake (11) is arranged to engage the drive train on the engine side of the transmission (5).

8. Method for operating a hydroelectric power plant (1) according to any of the preceding claims, wherein the monitoring unit (8) monitors the functionality of the converter (7), and in the event of a malfunction of the converter (7) closes the switch (9) and thereby establishes a direct electrical connection between the electric motor (6) and the AC mains connection (10), so that the electric motor (6) is operated at the mains frequency, thereby closing the closing member (2).

## Revendications

1. Centrale hydroélectrique (1) comprenant un organe de fermeture (2) et un système d'entraînement électrique (3) qui est relié à l'organe de fermeture (2), le système d'entraînement (3) comprenant une broche filetée (4), un engrenage (5) et un moteur électrique (6), qui définissent une chaîne cinématique, et dans lequel le système d'entraînement (3) comprend en outre un convertisseur (7) pour alimenter le moteur électrique (6), une unité de commande (8) pour commander le convertisseur (7) et une connexion au réseau de courant alternatif (10) avec une fréquence de réseau, dans lequel le système d'entraînement (3) comprend une unité de surveillance (8) pour surveiller l'état de fonctionnement du convertisseur (7) et un commutateur (9), l'unité de surveillance (8) et le commutateur (9) étant conçus de telle sorte que le moteur électrique (6) peut être actionné au moyen d'une connexion électrique directe entre le moteur électrique (6) et le raccordement au réseau de courant alternatif (10) lorsque l'unité de surveillance (8) détecte un mauvais fonctionnement du convertisseur (7), et dans lequel le moteur électrique (6), le réducteur (5) et la broche filetée (4) sont conçus de telle sorte qu'une vitesse de réglage du système d'entraînement (3), qui résulte d'un fonctionnement du moteur électrique (6) à la fréquence du réseau, est inférieure à une vitesse de fermeture maximale admissible de l'organe de fermeture (2).

2. Centrale hydroélectrique (1) selon la revendication 1, dans laquelle le système d'entra nement (3) comprend un interrupteur de fin de course (12) qui est conçu et agencé de manière à pouvoir déconnecter le moteur électrique (6) de la prise de courant alternatif (10) lorsque l'organe de fermeture se trouve dans la position fermée.

3. Centrale hydroélectrique (1) selon l'une des revendications 1 ou 2, dans laquelle le système d'entraînement (3) comprend une sécurité de surcharge (13) qui est conçue et disposée de telle sorte qu'elle puisse limiter le couple appliqué par le moteur électrique (6) et transmis à la chaîne cinématique en cas de blocage de la chaîne cinématique.

4. Centrale hydroélectrique (1) selon la revendication 3, dans laquelle la protection contre les surcharges (13) est disposée entre le moteur électrique (6) et le réducteur (5).

5. Centrale hydroélectrique (1) selon la revendication 3, dans laquelle le dispositif de sécurité contre les surcharges (13) est réalisé sous la forme d'un élément de friction.

6. Centrale hydroélectrique (1) selon l'une quelconque des revendications précédentes, dans laquelle le système d'entraînement (3) comprend un frein de maintien (11) configuré et agencé pour pouvoir bloquer la chaîne cinématique lorsque l'organe de fermeture (2) est en position fermée.

7. Centrale hydroélectrique (1) selon la revendication 6, dans laquelle le frein de retenue (11) est disposé de manière à pouvoir s'engager dans la chaîne cinématique côté moteur du réducteur (5).

8. Procédé d'exploitation d'une centrale hydroélectrique (1) selon l'une des revendications précédentes, dans lequel l'unité de surveillance (8) surveille la fonctionnalité du convertisseur (7) et, en cas de dysfonctionnement du convertisseur (7), ferme l'interrupteur (9) et établit ainsi une liaison électrique directe entre le moteur électrique (6) et le raccordement au réseau de courant alternatif (10), de sorte que le moteur électrique (6) fonctionne à la fréquence du réseau et ferme ainsi l'organe de fermeture (2).
